# EUROPÄISCHE PATENTSCHRIFT

(11) **EP 0 658 016 B1**
(45) Veröffentlichungstag und Bekanntmachung des Hinweises auf die Patenterteilung: **05.03.2003**
(21) Anmeldenummer: 94119154.6
(22) Anmeldetag: 05.12.1994
(51) Int. Cl.: H04B 10/155

(54) **Optischer Sender mit linearisierendem Abschlussnetzwerk**
Optical transmitter with linearising termination network
Emetteur optique avec circuit de linéarisation

(30) Priorität: 10.12.1993 DE 4342184
(43) Veröffentlichungstag der Anmeldung: 14.06.1995
(73) Patentinhaber: ALCATEL, 75008 Paris (FR)
(72) Erfinder: Krimmel, Heinz, D-70825 Korntal-Münchingen (DE); Fritschi, Rainer, D-70825 Korntal (DE); Otterbach, Jürgen, D-71229 Leonberg (DE)
(74) Vertreter: Kugler, Hermann, Dipl.-Phys.

(56) Entgegenhaltungen:
- EP-A- 0 407 919
- EP-A- 0 475 376
- EP-A- 0 547 394
- ELECTRONICS LETTERS., Bd.28, Nr.20, 24. September 1992, STEVENAGE GB Seiten 1875 - 1876 A.H.GNAUCK ET AL 'Comparison of direct and external modulation for CATV Lightwave transmission at 1.5 micrometer wavelength'
- IEEE JOURNAL ON SELECTED AREAS IN COMMUNICATION, Bd.8, Nr.7, September 1990, NEW YORK US Seiten 1369 - 1376 R.B.CHILDS ET AL 'Multichannel AM Video Transmission Using a High-Power Nd:YAG Laser and Linearized External Modulator'

## Beschreibung

Die Erfindung betrifft einen optischen Sender nach dem Oberbegriff des Patentanspruchs 1.

Ein solcher Sender ist bekannt aus: International Cable; Juli, 1992; Seiten 42-50, "External modulation system for AM fiber CATV transport, Part 2", insbesondere Seite 46, Fig. 7. Ein solcher Sender findet Verwendung in analog amplitudenmodulierten optischen Nachrichtenübertragungssystemen, insbesondere Kabelfernsehsystemen. Der optische Sender hat eine Laserlichtquelle, einen externen elektro-optischen Modulator, einen Linearisierer, sowie Mittel zur Detektion von Intermodulationen. Der externe Modulator ist z.B. ein integrierter optischer Modulator, wie sie aus IEEE Journal of Quantum Electronics, Band 27, Heft 3, 1991, Seiten 654-667, "High-Speed-III-V Semiconductor Intensity Modulators" bekannt sind.

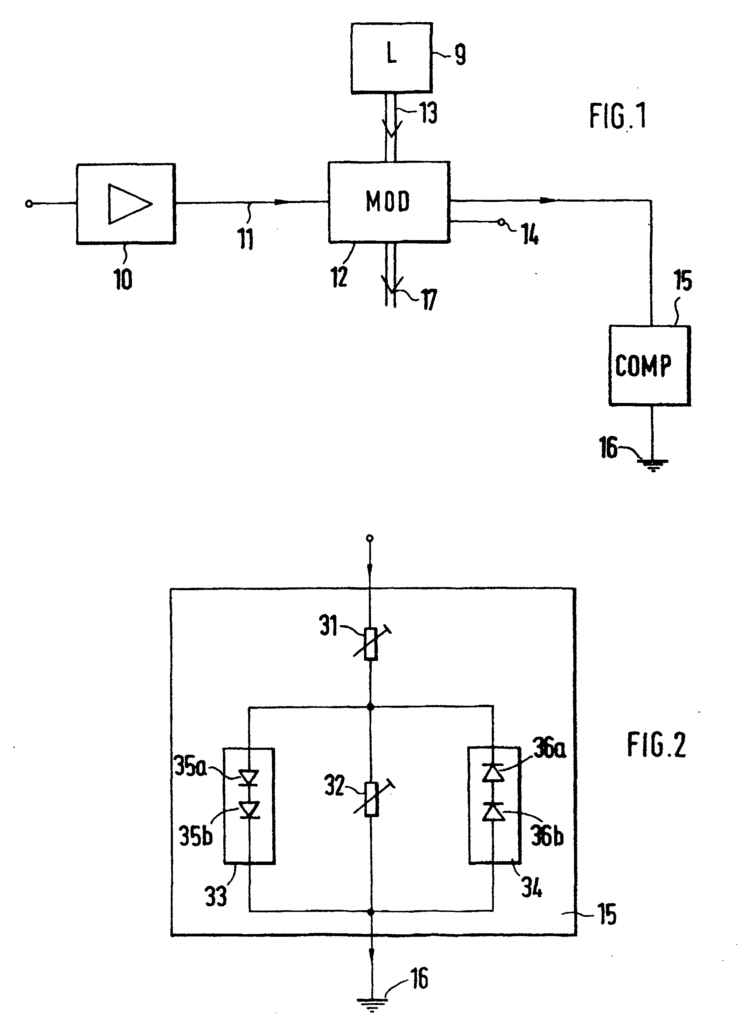

Fig. 1 der zweiten Literaturstelle zeigt schematisch einen Mach-Zehnder Modulator mit einem ersten Anschluß für das modulierende elektrische Signal (RF) und einem zweiten Anschluß, an dem ein Abschlußwiderstand, hier 50 Ohm, angeschlossen ist.

Die Kennlinie eines externen elektro-optischen Modulators ist nichtlinear und insbesondere die Kennlinie eines Mach-Zehnder Modulators ist sinusförmig (siehe Literaturstelle 1, Seite 44, rechte Spalte).

Die Literaturstelle 1 offenbart, das elektrische Signal erst durch einen Linearisierer zu verarbeiten, ehe es als modulierendes elektrisches Signal an den Mach-Zehnder-Modulator angelegt wird. Ein solcher Linearisierer hat die Aufgabe, die nicht lineare Kennlinie des Nach-Zehnder-Modulators so zu kompensieren, daß die Kennlinie der Zusammenschaltung von Linearisierer und Mach-Zehnder-Modulator linear ist. Der Linearisierer wird häufig auch als elektronischer Vorverzerrer oder Kompensator bezeichnet.

Die nichtlineare Kennlinie des Modulators kann veränderlich sein, z.B. durch Alterung der Bauelemente. Wird diese nichtlineare Kennlinie nicht oder nur teilweise kompensiert, so treten im modulierten optischen Ausgangssignal Störungen, wie z.B. Verzerrungen und Intermodulationen auf.

Eine Kennlinie kann wie eine Funktion in eine gerade Komponente und in eine ungerade Komponente zerlegt werden. Diese beiden Komponenten erzeugen jeweils charakteristische Intermodulationen, die als Intermodulation gerader, z.B. zweiter, oder ungerader, z.B. dritter, Ordnung bezeichnet werden.

Die erste Literaturstelle offenbart einen optischen Sender, der Mittel zur Messung dieser Intermodulationen hat. Diese Mittel zur Messung enthalten zusätzlich Mittel zur Regelung des Linearisierers und des Arbeitspunktes des Mach-Zehnder-Modulators.

In einer weiteren Literaturstelle, der nachveröffentlichten EP 0 725 299 A2, wird ein Regelkreis für einen elektrooptischen Modulator beschrieben. Dieser Regelkreis wird von einem Pilotsignal gespeist, das am Ausgang auf dem modulierten Lichtsignal abgetastet wird und zu einer Beeinflussung der Steuerelektroden führt. Dieser Aufbau ist aufwendig, die Regelelektronik muß sehr schnell sein und das optische Signal darf durch das Pilotsignal nicht zu sehr verzerrt werden.

Ein Problem des bekannten optischen Senders ist, daß der Linearisierer zwischen Endverstärker und dem optischen Modulator eingefügt ist und so zu einem Leistungsverlust des modulierenden elektrischen Signales führt.

Die Aufgabe der Erfindung ist, einen optischen Sender der eingangs genannten Art anzugeben, bei dem das Problem der Nichtlinearität des Modulators gelöst ist, ohne daß ein zusätzlicher Leistungsverlust erzeugt wird. Diese Aufgabe wird wie im Patentanspruch 1 angegeben gelöst. Weiterbildungen sind den Unteransprüchen entnehmbar.

Die Erfindung beruht auf der Grundidee, ein kompensierendes Netzwerk in den schon vorhandenen Abschlußwiderstand des elektro-optischen Modulators zu integrieren. Ein Vorteil der Erfindung ist, daß sie eine einseitige Erdung der in dem kompensierenden Netzwerk verwendeten Entzerrerdioden ermöglicht. Parasitäre Kapazitäten dieser Bauelemente können so verringert werden. Weiterhin erlaubt diese Erfindung eine massebezogene Regelung des kompensierenden Netzwerkes.

Die Erfindung wird nun anhand der Zeichnungen in Beispielen näher erläutert. Es zeigen:
- **Fig. 1**: eine erste Ausführung eines optischen Senders,
- **Fig. 2**: eine Ausführung des erfindungsgemäßen Abschlußnetzwerkes **15**,
- **Fig. 3**: eine zweite Ausführung des erfindungsgemäßen optischen Senders,
- **Fig. 4**: eine erste Ausführung des Abschlußnetzwerkes **15** für den optischen Sender nach Fig. 3,
- **Fig. 5**: eine zweite Ausführung des Abschlußnetzwerkes **15** für den optischen Sender nach Fig. 3.

Der optische Sender läßt sich anhand von Fig. 1 wie folgt beschreiben:

Der optische Sender hat einen Laser **9**, einen Endverstärker **10**, einen elektro-optischen Modulator **12,** im folgendem als Modulator bezeichnet, und ein Abschlußnetzwerk **15.** Der Modulator **12** hat drei elektrische Anschlüsse. Das sind ein Anschluß **14**, über den sein Arbeitspunkt eingestellt wird, sowie ein Eingang und ein Ausgang.

Der Endverstärker **10** ist mit dem elektrischen Eingang des Modulators **12** verbunden. Der elektrische Ausgang des Modulators **12** ist über das Abschlußnetzwerk **15** mit einem Bezugspotential **16**, hier z.B. Masse, verbunden.

Der Modulator **12** hat ferner einen optischen Eingang, an dem das Ausgangslicht **13** des Lasers **9** anliegt, und einen optischen Ausgang, an dem ein optisches Ausgangssignal **17** austritt.

Der Endverstärker **10** verstärkt ein elektrisches Signal, z.B. ein Fernsehsignal. Das verstärkte elektrische Signal **11** gelangt zu dem elektro-optischen Modulator **12**, der das Ausgangslicht **13** des Lasers **9** zu einem amplitudenmodulierten optischen Ausgangssignal **17** moduliert. Das elektrische Signal gelangt über das Abschlußnetzwerk **15** zum Bezugspotential **16**.

Das Abschlußnetzwerk **15** hat zwei Funktionen. Zum ersten bildet es einen elektrischen Abschluß des Modulators **12**, in der Regel **50** Ohm, gegenüber dem Bezugspotential **16.** Zum zweiten kompensiert es die nichtlineare Kennlinie des Modulators **12**.

Fig. 2 zeigt ein Abschlußnetzwerk **15** wie es erfindungsgemäß in dem optischen Sender nach Fig. 1 verwendet wird. Dieses Abschlußnetzwerk **15** hat eine ungerade Kennlinie, die Intermodulationen des optischen Ausgangssignales **17** ungerader Ordnung kompensiert.

Das Abschlußnetzwerk **15** nach Fig. 2 besteht aus einer Serienschaltung eines ersten einstellbaren Widerstandes **31** und eines zweiten einstellbaren Widerstandes **32**, der an seinem zweiten Anschluß mit dem Bezugspotential **16** verbunden ist. Parallel zum zweiten einstellbaren Widerstand **32** sind zwei zueinander parallele nichtlineare Netzwerke **33, 34** geschaltet. Diese sind vorzugsweise zwei zueinander antiparallel geschaltete Diodennetzwerke, die je eine oder mehrere in Serie geschaltete Dioden **35a, 35b**, **36a, 36b** haben. Diese Dioden können zum Beispiel Schottky-Dioden sein. Andere nichtlineare Bauelemente wie Bipolar- oder Feldeffekttransistoren können ebenfalls die nichtlinearen Netzwerke **33, 34** bilden.

Hat das modulierende elektrische Signal eine so kleine Amplitude, daß die Intermodulationen des optischen Ausgangssignals des Modulators vernachlässigbar sind, so hat das Abschlußnetzwerk **15** einen konstanten Gesamtwiderstand, der z.B. gleich den oben genannten 50 Ohm ist.

Mit zunehmender Amplitude des modulierenden elektrischen Signales nehmen aufgrund der nichtlinearen Kennlinie des Modulators die Störungen, wie z.B. Verzerrungen und Intermodulationen, des optischen Signales zu. Bei einer ausreichend großen Amplitude des elektrischen Signales ist der Spannungsabfall an dem zweiten einstellbaren Widerstand **32** so groß, daß die nichtlinearen Netzwerke **33, 34** in einen aktiven Zustand übergehen. Der zweite einstellbare Widerstand **32** ist so einzustellen, daß die Störungen des optischen Signales minimal sind. In der vorzugsweisen Ausgestaltung der nichtlinearen Netzwerke **33, 34** ist der Spannungsabfall an dem zweiten einstellbaren Widerstand **32** gleich der Knickspannung der Dioden **35a, 35b**, **36a**, **36b**. Wird diese Knickspannung, bei Schottky-Dioden ca. 0,3 V, überschritten, so wird der Gesamtwiderstand des Abschlußnetzwerkes **15** nichtlinear verringert und die nichtlineare Kennlinie des Modulators auf diese Weise kompensiert.

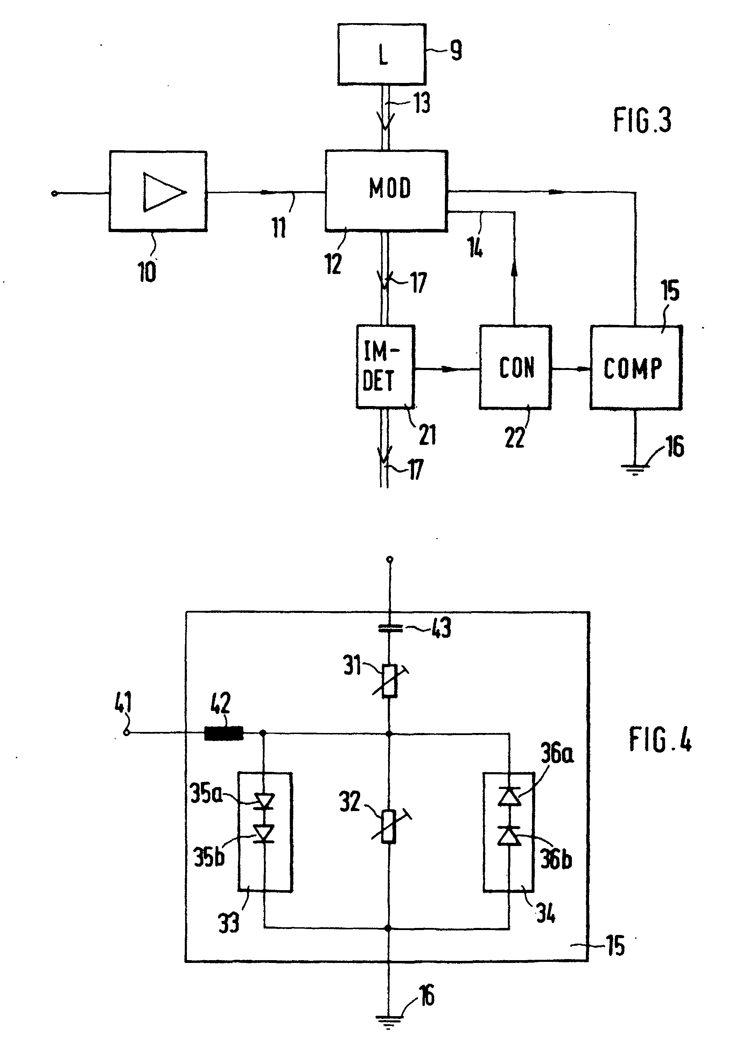

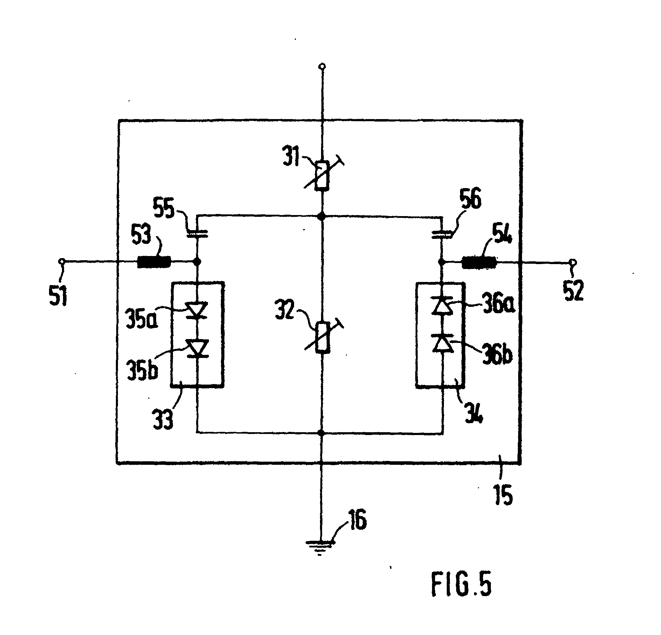

Fig. 3 zeigt eine zweite Ausführung des erfindungsgemäßen optischen Senders. Dieser optische Sender hat, wie auch die erste Ausführungsform nach Fig. 1, den Endverstärker **10** und den Modulator **12**. Weiterhin hat der optische Sender nach Fig. 3 ein Abschlußnetzwerk **15**, das, wie weiter unten noch anhand der Fig. 4 und Fig. 5 beschrieben wird, von der ersten Ausführungsform nach Fig. 2 abweicht.

Die erste Ausführungsform nach Fig. 1 wird ergänzt durch eine Meßeinrichtung **21** zur Messung der Intermodulationen des modulierten optischen Signales **17** und durch eine Regelungseinrichtung **22.** Der Endverstärker **10** ist mit dem elektrischen Eingang des Modulators **12** verbunden. Der elektrische Ausgang des Modulators **12** ist über das Abschlußnetzwerk **15** mit einem Bezugspotential **16**, hier z.B. Masse, verbunden. Die Regelungseinrichtung **22** ist mit dem Anschluß 14 zur Einstellung des Arbeitspunktes des optischen Modulators **12** sowie mit dem Abschlußnetzwerk **15** verbunden.

Das optische Ausgangssignal **17** durchläuft die Mittel zur Messung **21** der Intermodulationen. Die Meßeinrichtung **21** bestimmt Größe und Art dieser Intermodulationen und gibt entsprechende Signale an die Regelungseinrichtung **22**. Verfahren und Vorrichtung zur Bestimmung von Verzerrungen und Intermodulationen des modulierten optischen Signales **17** sind bekannt, z.B. aus der ersten Literaturstelle, und nicht Gegenstand dieser Erfindung. Die Regelungseinrichtung **22** regelt bei Auftreten von Intermodulationen gerader Ordnung den Arbeitspunkt des Modulators **12** und bei Auftreten von Intermodulationen ungerader Ordnung das Abschlußnetzwerk **15** nach Fig. 4, das im folgenden genauer erläutert wird, so daß die jeweiligen Intermodulationen minimal werden. Vorteil dieser Ausführungsform ist es, daß der Modulator ständig optimal eingestellt werden kann.

Fig. 4 zeigt eine erste Ausführungsform des regelbaren Abschlußnetzwerkes **15**, wie es in dem optischen Sender nach Fig. 3 verwendet werden kann. In Aufbau und Funktion unterscheidet es sich von der ersten Ausführungsform des Abschlußnetzwerkes **15** nach Fig. 2 wie folgt:

Es hat zusätzlich einen Koppelkondensator **43**, eine Induktivität **42** und einen Regelanschluß **41**. Der Koppelkondensator ist in Serie zum ersten einstellbaren Widerstand **31** geschaltet und trennt gleichstrommäßig den Modulator **12** vom Abschlußnetzwerk **15**.

Die Induktivität **42** verbindet das Abschlußnetzwerk **15** mit dem Regelanschluß **41**, an den eine von der Regelungseinrichtung **22** erzeugte Regelspannung angelegt wird. Die Induktivität **42** ist andererseits mit den nichtlinearen Netzwerken **33**, **34** verbunden, und führt diesen die Regelspannung zu.

In der vorliegenden Ausführung der nichtlinearen Netzwerke **33, 34** durch eine Diode **35a, 36a** oder durch eine Serienschaltung von Dioden **35a, 35b**, **36a, 36b** ist die Induktivität an die Verbindung des ersten einstellbaren Widerstandes **31** mit dem zweiten einstellbaren Widerstand **32** angeschlossen. Die Regelspannung wirkt als eine Vorspannung für die Dioden **35a, 36a**, bzw. für die Serienschaltung der Dioden **35a, 35b**, **36a, 36b.**

Sind die nichtlinearen Netzwerke **33**, **34** durch eine Diode **35a, 36a** oder durch eine Serienschaltung von Dioden **35a, 35b**, **36a, 36b** realisiert, so wird bei einer positiven Regelspannung die Diode **35a**, beziehungsweise die Serienschaltung von Dioden **35a, 35b** bei niedrigeren Spannungen leitend und die Diode **36**, beziehungsweise die Serienschaltung von Dioden **36a**, **36b** erst bei betragsmäßig größeren negativen Spannungen leitend, als dies bei dem Abschlußnetzwerk **15** nach Fig. 2 der Fall ist.

Andere Ausführungsformen der Mittel zur Einkopplung **41**, **42, 43** sind ebenfalls möglich. So kann z.B. die Regelspannung ebenso zwischen dem optischen Modulator und dem Abschlußnetzwerk **15** eingekoppelt werden. Auch kann auf den Koppelkondensator **43** verzichtet werden, da der Modulator ein Netzwerk zur Einkopplung seiner Arbeitspunktspannung hat, das mit einem Koppelkondensator, angebracht zwischen dem optischen Modulator und dem Abschlußnetzwerk **15**, diese beiden Elemente gleichstrommäßig trennt.

Fig. 5 zeigt eine zweite Ausführung des Abschlußnetzwerkes **15** für den optischen Sender nach Fig. 3. Diese zweite Ausführung des Abschlußnetzwerkes **15** weicht von der Ausführung nach Fig. 2 wie folgt ab. Jedes der beiden nichtlinearen Netzwerke **33, 34** hat ein gesondertes Netzwerk zur Einkopplung von jeweils einem Regelsignal. Die Netzwerke zur Einkopplung haben zumindest einen Koppelkondensator **55, 56** und eine Induktivität **53**, **54.** Je ein Koppelkondensator **55, 56** ist in Serie zu einem nichtlinearen Netzwerk **33, 34** geschaltet und trennt so gleichstrommäßig die nichtlinearen Netzwerke **33, 34** voneinander und von dem Modulator. An die Verbindung des Koppelkondensators **55, 56** mit dem nichtlinearen Netzwerk **33, 34** ist je eine der Induktivitäten **53, 54** angeschlossen, deren anderer Anschluß den jeweiligen Regelanschluß **51**, **52** bildet. Diese Ausführung erlaubt es, die beiden nichtlinearen Netzwerke **33, 34** getrennt zu regeln. Auf diese Weise ist eine Regelung zur Minimierung der Intermodulationen sowohl gerader als auch ungerader Ordnung möglich. Eine Regelung des Arbeitspunktes über den Anschluß **14** zur Arbeitspunkteinstellung des Modulators, wie noch bei der Beschreibung der Fig. 3 angegeben, kann folglich entfallen.

In den Ausführungsbeispielen ist die Erfindung aus diskreten Elementen aufgebaut, sie kann aber auch ganz oder teilweise integriert werden. Dies hat den Vorteil, daß Verbindungsleitungen mit ihren parasitären Eigenschaften minimiert werden.

## Patentansprüche

1. Optischer Sender zur Erzeugung eines modulierten optischen Ausgangssignals (**17**), mit einem elektro-optischen Modulator (**12**) mit einer nichtlinearen Ausgangskennlinie, wobei ein Abschlussnetzwerk (**15**) den elektro-optischen Modulator (**12**) mit einem Bezugspotential (**16**) verbindet, **dadurch gekennzeichnet, dass** das Abschlussnetzwerk (**15**) ein nichtlineares Netzwerk ist, enthaltend eine Serienschaltung eines ersten Widerstandes (**31**) und eines zweiten Widerstandes (**32**), der am Bezugspotential (**12**) liegt, und enthaltend zwei zueinander parallele nichtlineare Netzwerke (**33, 34**), die parallel zum zweiten Widerstand (**32**) geschaltet sind.

2. Optischer Sender nach Anspruch 1, **dadurch gekennzeichnet, dass** die zwei zueinander parallelen nichtlinearen Netzwerke (**33, 34**) zwei zueinander antiparallele Diodennetzwerke sind, die jeweils eine Diode (**35a, 36a**) oder eine Serienschaltung von Dioden (**35a, 35b, 36a**, **36b**) enthalten.

3. Optischer Sender nach Anspruch 2, **dadurch gekennzeichnet, dass** das Abschlussnetzwerk (**15**) Mittel zum Anlegen (**51, 53, 55; 52, 54, 56**) je einer Regelspannung an jedes der beiden Diodennetzwerke (**33, 34**) hat (Fig. 5).

4. Optischer Sender nach Anspruch 2, **dadurch gekennzeichnet, dass** das Abschlussnetzwerk (**15**) Mittel zum Anlegen (**41, 42**) einer Regelspannung für beide Diodennetzwerke (**33, 34**) hat (Fig. 4).

5. Optischer Sender nach Anspruch 1, **dadurch gekennzeichnet, dass** er eine Intermodulationsmeßeinrichtung (**21**) zur Messung von Intermodulationen des modulierten optischen Ausgangssignals und eine Regelungseinrichtung (**22**) zur Regelung des Abschlußnetzwerkes (**15**) hat.

6. Optischer Sender nach Anspruch 5, **dadurch gekennzeichnet, dass** das Abschlussnetzwerk (**15**) von der Regelungseinrichtung (**22**) so geregelt wird, dass die Intermodulationen des modulierten optischen Signals (**17**) minimiert werden.

7. Optischer Sender nach Anspruch 6, **dadurch gekennzeichnet, dass** die Regelungseinrichtung (**22**) mit einem Anschluss (**14**) zur Einstellung des Arbeitspunktes des elektro-optischen Modulators (**12**) verbunden sind, dessen Arbeitspunkt von der Regelungseinrichtung (**22**) so geregelt wird, dass Intermodulationen gerader Ordnung minimiert werden, und dass die Regelungseinrichtung (**22**) das Abschlussnetzwerk (**15**) so regelt, dass Intermodulationen ungerader Ordnung minimiert werden (Fig. 3).

8. Optischer Sender nach Anspruch 1, **dadurch gekennzeichnet, dass** der elektro-optische Modulator (**12**) und das Abschlussnetzwerk (**15**) in einer Einheit integriert sind.

## Claims

1. Optical transmitter for generating a modulated optical
output signal (17), with an electro-optical modulator (12) having a nonlinear output characteristic response, wherein a terminating network (15) connects the electro-optical modulator (12) to a reference potential (16), **characterised in that** the terminating network (15) is a nonlinear network containing a series circuit of a first resistor (31) and a second resistor (32), which is applied to the reference potential (16), and containing two mutually parallel nonlinear networks (33, 34), which are connected in parallel with the second resistor (32).

2. Optical transmitter according to Claim 1,
**characterised in that** the two mutually parallel nonlinear networks (33, 34) are mutually antiparallel diode networks, which each contain a diode (35a, 36a) or a series circuit of diodes (35a, 35b, 36a, 36b).

3. Optical transmitter according to Claim 2,
**characterised in that** the terminating network (15) has means (51, 53, 55; 52, 54, 56) for applying a respective control voltage to each of the two diode networks (33, 34) (Fig. 5).

4. Optical transmitter according to Claim 2,
**characterised in that** the terminating network (15) has means (41, 42) for applying a control voltage for both diode networks (33, 34) (Fig. 4).

5. Optical transmitter according to Claim 1,
**characterised in that** it has an intermodulation measurement device (21) for measuring intermodulations of the modulated optical output signal, and a control device (22) for controlling the terminating network (15).

6. Optical transmitter according to Claim 5,
**characterised in that** the terminating network (15) is controlled by the control device (22) in such a way that the intermodulations of the modulated optical signal (17) are minimised.

7. Optical transmitter according to Claim 6,
**characterised in that** the control device (22) is connected to a terminal (14) for adjusting the working point of the electro-optical modulator (22), whose working point is controlled by the control device (22) in such a way that even-order intermodulations are minimised, and **in that** the control device (22) controls the terminating network (15) in such a way that odd-order intermodulations are minimised (Fig. 3).

8. Optical transmitter according to Claim 1,
**characterised in that** the electro-optical modulator (12) and the terminating network (15) are integrated in a unit.

## Revendications

1. Emetteur optique pour générer un signal optique modulé de sortie (17) à l'aide d'un modulateur électro-optique (12) ayant une caractéristique de sortie non linéaire, un réseau terminal (15) reliant le modulateur électro-optique (12) au potentiel de référence (16), **caractérisé en ce que** le réseau terminal (15) est un réseau non linéaire contenant un montage série d'une première résistance (31) et d'une deuxième résistance (32) qui est reliée au potentiel de référence (16), et comprenant deux réseaux parallèles non linéaires (33, 34) qui sont commutés parallèlement à la deuxième résistance (32).

2. Emetteur optique selon la revendication 1, **caractérisé en ce que** les deux réseaux parallèles non linéaires (33, 34) sont deux réseaux à diodes antiparallèles comprenant respectivement une diode (35a, 36a) ou un montage série de diodes (35a, 35b, 36a, 36b).

3. Emetteur optique selon la revendication 2, **caractérisé en ce que** le réseau terminal (15) possède des moyens pour appliquer (51, 53, 55 ; 52, 54, 56) respectivement une tension de régulation à chacun des deux réseaux à diodes(33, 34)(figure 5).

4. Emetteur optique selon la revendication 2, **caractérisé en ce que** le réseau terminal (15) possède des moyens pour appliquer (41, 42) une tension de régulation pour les deux réseaux à diodes (33, 34) (figure 4).

5. Emetteur optique selon la revendication 1, **caractérisé en ce qu'**il comporte un dispositif de mesure d'intermodulation (21) pour mesurer des intermodulations du signal optique modulé de sortie et un dispositif de régulation (22) pour régler le réseau terminal (15).

6. Emetteur optique selon la revendication 5, **caractérisé en ce que** le réseau terminal (15) est réglé par le dispositif de régulation (22) de telle sorte que les intermodulations du signal optique modulé (17) sont minimisées.

7. Emetteur optique selon la revendication 6, **caractérisé en ce que** le dispositif de régulation (22) est relié à un branchement (14) pour ajuster le point de fonctionnement dynamique du modulateur électro-optique (12) dont le point de fonctionnement dynamique est réglé par le dispositif de régulation (22) de telle sorte que les intermodulations d'ordre linéaire sont minimisées, et **en ce que** le dispositif de régulation (22) règle le réseau terminal (15) de telle sorte que les intermodulations d'ordre non linéaire sont minimisées (figure 3).

8. Emetteur optique selon la revendication 1, **caractérisé en ce que** le modulateur électro-optique (12) et le réseau terminal (15) sont intégrés dans une unité.
